# EUROPEAN PATENT SPECIFICATION

(11) **EP 2 733 023 B1**
(45) Date of publication and mention of the grant of the patent: **23.05.2018**
(21) Application number: 12811943.5
(22) Date of filing: 06.07.2012
(51) Int. Cl.: B60R 21/237, B60R 21/16

(54) **SIDE AIRBAG FOR VEHICLE**
SEITENAIRBAG FÜR FAHRZEUGE
AIRBAG LATÉRAL DESTINÉ À UN VÉHICULE

(30) Priority: 14.07.2011 JP 2011155812
(43) Date of publication of application: 21.05.2014
(73) Proprietor: Autoliv Development AB, 447 83 Vårgårda (SE)
(72) Inventor: MINEMURA Akira, Yokohama-shi Kanagawa 222-8580 (JP); YOSHIDA Yuichiro, Yokohama-shi Kanagawa 222-8580 (JP); ASADA Teruyuki, Yokohama-shi Kanagawa 222-8580 (JP); UJIIE Tohru, Yokohama-shi Kanagawa 222-8580 (JP)
(74) Representative: Müller Verweyen
(86) International application number: PCT/JP2012/067284
(87) International publication number: WO 2013/008732

(56) References cited:
- EP-A2- 2 020 343
- JP-A- 9 136 598
- JP-A- 9 272 393
- JP-A- 9 315 245
- JP-A- 10 175 499
- JP-A- 11 059 312
- JP-A- 2001 114 060
- US-A1- 2010 133 796
- US-A1- 2010 308 568

## Description

### BACKGROUND OF THE INVENTION

### 1. Field of the Invention

A vehicle side airbag is provided in which the use of fewer components and an easier assembly operation enable the adjustment of the airbag in an inflated form, and, in particular, end portions of the airbag can be sufficiently thick when the airbag is inflated, which allows the shoulder of an occupant to be suitably restricted.

### 2. Description of the Related Art

Various forms of airbags are known which are used as apparatuses protecting automobile occupants. Among the various forms of airbags, Japanese Patent Application Laid-open No. 2006-224817 is known as a vehicle side airbag that is deployed and inflated at a position lateral to an occupant from a seat back toward an interior front side of the vehicle.

An object of the "airbag" in Japanese Patent Application Laid-open No. 2006-224817 is to provide an airbag that allows an increase in the thickness of a desired area of the airbag and thus in the deployment width of the area. The airbag is in a bag shape by laying a first panel and a second panel on top of each other so that the overlaid panels form a plane and sealing peripheral portions of the overlaid panels with an outer peripheral seam. Inside the airbag, a base end of a tether is joined to an upper end portion of the outer peripheral seam, and a leading end of the tether is joined to a thickness regulating portion. Inside the airbag in an inflated and deployed state, the tether is stretched to form a deployment surface extending in a lateral direction of the vehicle. As a result of the formation of the deployment surface, a shoulder restricting portion is formed in the airbag as an increased thickness area to promote the inflation of the airbag in the lateral direction of the vehicle.

According to Japanese Patent Application Laid-open No. 2006-224817, the tether is provided on each of the two panels in order to allow adjustment of the inflated form of the airbag, for example, an increase in the deployment width of the airbag. This disadvantageously increases the number of components of the airbag and thus complicates an operation of assembling the airbag.

Furthermore, there are generic side airbags known from the documents US 2010/133786 A1, corresponding to the preamble of claim 1, US 2010/308568 A1 and EP 2 020 343 A2.

With the above-described conventional problems in view, it is an object of the present invention to provide a vehicle side airbag in which the use of fewer components and an easier assembly operation enable the adjustment of the airbag in an inflated form, and, in particular, end portions of the airbag can be sufficiently thick when the airbag is inflated, which allows the shoulder of an occupant to be suitably restricted.

### SUMMARY OF THE INVENTION

An aspect of the present invention provides a vehicle side airbag that is deployed and inflated at a position lateral to an occupant, the vehicle side airbag including: a base cloth folded in a mountain folding manner at a pair of mountain fold line portions set on both sides of a bag shaping reference line and folded in a valley folding manner at the bag shaping reference line, an outer peripheral edge of the base cloth being joined to another outer peripheral edge of the base cloth excepting the pair of mountain fold line portions and an inflator installation portion to form the base cloth into a bag shape wherein the bag shaping reference line is a junction line at which a plurality of base cloth pieces forming the base close are joined together.

The bag shaping reference line is desirably a fold-back line at which the base cloth is folded in an overlaid manner. The bag shaping reference line is preferably a junction line at which a plurality of base cloth pieces forming the base cloth are joined together.

An aspect of the present invention provides a vehicle side airbag comprising: a first panel part positioned to face the occupant and forming a main occupant protecting surface; a second panel part positioned to face the vehicle and contacting the vehicle to form a main occupant protecting surface; and an integration part that integrates the first panel part and the second panel part together, the first panel part and the second panel part being arranged in such a manner that the main occupant protecting surfaces overlap each other, a pair of mountain fold line portions being formed on the first panel part and the second panel part in such a manner that each of the panel portions is folded at the mountain fold line portion in a mountain folding manner, a valley fold portion being formed between the pair of mountain fold line portions on the first panel part and the second panel part at a predetermined distance from each of the mountain fold line portions, and each of the first panel part and the second panel part including a peripheral stitched portion at which peripheral portions of the first panel part and the second panel part are stitched together in such a manner that the valley fold portion is at least partly exposed to an outside when the airbag is deployed and inflated, the configuration of which forms the first panel part and the second panel part into a bag shape.

The peripheral stitched portion preferably includes parts in which the mountain fold line portions of the first panel part and the second panel part are coupled together and parts in which the valley fold portion is coupled to the first panel part and the second panel part at opposite end portions thereof.

Preferably, each of first panel part and the second panel part is formed of a single base cloth, and the valley fold portion is positioned at the integration part. Desirably, the first panel part and the second panel part are formed of different base cloth pieces, and the integration part is formed by stitching.

The mountain fold line portions and the valley fold portion are substantially parallel to each other. The predetermined distance from the valley fold portion to the mountain fold portion of the first panel part is preferably substantially equal to the predetermined distance from the valley fold portion to the mountain fold portion of the second panel part.

The vehicle side airbag according to the present invention enables an inflated form of the airbag to be adjusted using a small number of components and an easy assembly operation and particularly enables a sufficient thickness to be provided for end portions of the airbag when the airbag is inflated, allowing the desired body site of an occupant such as the occupant's shoulder to be suitably restricted.

### BRIEF DESCRIPTION OF THE DRAWINGS

FIG. 1 is a diagram showing a vehicle side airbag, wherein a bag main body in an inflated state and a vehicle seat are viewed from a front side to a rear side of the vehicle;
FIG. 2 is a diagram of the inflated bag main body of the vehicle side airbag shown in FIG. 1 and a vehicle seat as viewed from a side of the vehicle;
FIG. 3 is a development of a base cloth forming the bag main body of the vehicle side air bag shown in FIG. 1;
FIG. 4 is a front view showing an embodiment of a vehicle side airbag according to the present invention in which a base cloth has not been folded yet;
FIG. 5 is a cross-sectional view taken along line G-G in FIG. 4;
FIG. 6 is a front view of the base cloth formed into the vehicle side airbag in FIG. 4 as a finished product; and
FIG. 7 is a cross-sectional view taken along line H-H in FIG. 6.

### DESCRIPTION OF THE PREFERRED EMBODIMENTS

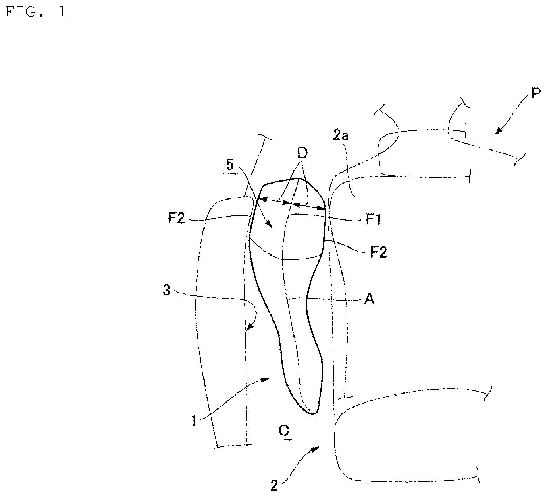

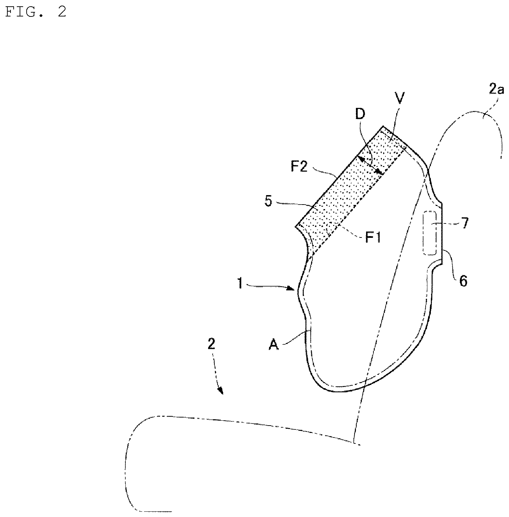

A first embodiment of a vehicle side airbag according to the present invention will be described below in detail with reference to the attached drawings. FIG. 1 is a diagram showing that a bag main body is in a deployed and inflated state; in FIG. 1, a vehicle seat is viewed from a front side toward a rear side of the vehicle. Likewise, FIG. 2 is a diagram showing that the bag main body is in the deployed and inflated state; in FIG. 2, the vehicle seat is viewed from a side of the vehicle.

A bag main body 1 of the vehicle side airbag is housed, for example, inside a seat back 2a of a vehicle seat 2. For example, in a case of the bag main body 1 encased for the driver seat or passenger seat, when an inflator gas is introduced into the bag main body 1, the bag main body 1 is deployed and inflated at a position lateral to an occupant P from the seat back 2a toward an interior front side of the vehicle. As shown in FIG. 1, the deployed and inflated bag main body 1 is positioned in a gap C between the occupant P seated in the vehicle seat 2 and an interior surface 3 such as a B pillar or a vehicle door which faces the occupant P, thus protecting the occupant P in an interior width direction.

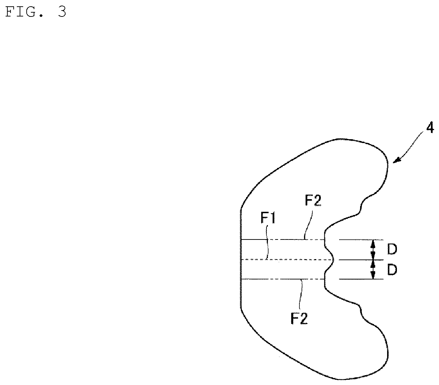

In the vehicle side airbag according to the first embodiment, the bag main body 1 is produced using a base cloth 4 formed of well-known materials. FIG. 3 shows a development of the base cloth 4. The bag main body 1 of the vehicle side airbag according to the first embodiment is provided by forming the single base cloth 4 into a bag shape.

Specifically, the single base cloth 4 is formed into a bag shape by folding the base cloth 4 in half and joining resulting outer peripheral edges together (shown by an alternate long and short dash line A in the figures) . The single base cloth 4 is formed by an outer contour that is line-symmetric with respect to a reference line (bag shaping reference line) for formation of the vehicle side airbag, that is, a fold-back line F1 at which the base cloth 4 is folded in half according to the first embodiment. The outer contour of the base cloth 4 shown in FIG. 3 is one example, and the base cloth 4 may be formed to have an outer contour other than this.

As shown in FIG. 3, the base cloth 4 includes a pair of mountain fold lines (mountain fold portions) F2 set on opposite sides of the fold-back line F1. An approximately equal separation distance D is set between the fold-back line F1 and each of the mountain fold lines F2. When the base cloth is folded at the pair of mountain fold lines F2 in a mountain folding manner, the base cloth is folded at the fold-back line F1, sandwiched between the mountain fold lines F2, in a valley folding manner. The mountain fold lines F2 and the valley fold at the fold-back line F1 provide the base cloth 4 with a V-shaped bent portion 5 that is recessed from the mountain fold lines F2 toward the fold-back line F1 as a result of the partial folding between the mountain fold line F2 and the fold-back line F1.

The separation distance D, that is, the amount by which the bag main body 1 is partly folded inward, is appropriately set as shown in FIG. 2, depending on a volume V to be provided for the bent portion 5. An increase in the volume V of the bent portion 5 increases the interior width-wise extent of the bag main body 1 at the position where the bent portion 5 is formed.

The base cloth 4 with the V-shaped bent portion 5 formed therein is formed into a bag shape by joining the outer peripheral edges together (A) except at the pair of mountain fold lines F2 and the inflator installation portion 6. The bent portion 5 occupies end portion positions of the bag main body 1. When the outer peripheral edges are joined together (A) except at the pair of mountain fold lines F2, the mountain fold lines F2 of the pair of mountain fold lines F2 can be contacted with each other and separated from each other. This allows the V-shaped bent portion 5 to be narrowed and widened. An inflator 7 is inserted into the inflator installation portion 6.

Operation of the vehicle side airbag according to the first embodiment will be described. The bag main body 1 of the vehicle side airbag in a folded state is housed, for example, inside the seat back 2a. The V-shaped bent portion 5 is positioned and set to deploy and inflate toward the periphery of the occupant P's shoulder. The bag main body 1 is deployed and inflated by an inflator gas flowing therein from the inflator 7 installed in the inflator installation portion 6. The bag main body 1 is thus positioned in the gap C between the occupant P and the interior surface 3 to protect the occupant P in the interior width direction.

In the vehicle side airbag according to the first embodiment, the bag main body 1 includes the V-shaped bent portion 5 formed by the pair of mountain fold lines F2 and the fold-back line F1 both set on the single base cloth 4. At the V-shaped bent portion 5, the pressure of the inflator gas causes the fold-back line F1 to project outward from the inside of the bent portion 5. Thus, the pair of mountain fold lines F2 is inflated so that the mountain fold lines F2 separate from each other.

The inflated form of the V-shaped bent portion 5 is adjusted by appropriately setting the separation distance D between the pair of mountain fold lines F2 and the fold-back line F1 (the volume V of the bent portion 5). Thus, the manner of inflation of the bag main body 1 and the deployment width of the bag main body 1 can be easily adjusted by the V-shaped bent portion 5, formed only by the pair of mountain fold lines F2 and the fold-back line F1, at which the base cloth 4 is folded in half.

Thus, in the vehicle side airbag according to the first embodiment, the V-shaped bent portion 5, including the fold-back line F1 and the pair of mountain fold lines F2, is formed in the single base cloth 4. This enables the manner of local inflation of the bag main body 1 to be appropriately adjusted. Consequently, the inflation form of the bag main body 1 can be adjusted using a small number of components without components such as a tether and using an easy assembly operation of folding the base cloth back.

Furthermore, the volume V of the bent portion 5 can be optionally and flexibly adjusted by appropriately setting the separation distance D between the fold-back line F1 and the pair of mountain fold lines F2, in other words, by appropriately setting the amount by which the base cloth is folded. Thus, the manner of inflation of the bag main body 1 can be freely adjusted within an optional range.

In particular, a sufficient thickness can be provided for end portions of the bag main body 1 in the inflated state by appropriately setting the volume V of the V-shaped bent portion 5. Since the sufficient thickness can thus be provided for the end portions, the first embodiment can exhibit excellent occupant protecting performance by suitably and sufficiently restricting the occupant P's shoulder.

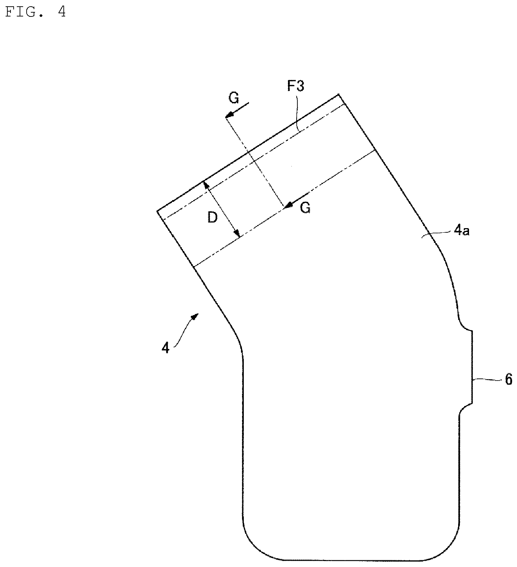

FIG. 4 to FIG. 7 show a vehicle side airbag according to a second embodiment. According to the second embodiment, the bag shaping reference line is, instead of the fold-back line F1, a junction line F3 that joins together base cloth pieces 4a forming the base cloth 4.

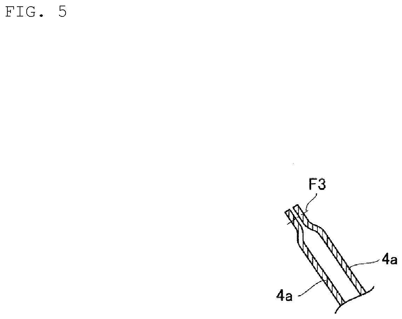

As shown in FIG. 4 and FIG. 5, the base cloth 4 is formed by joining edges of the two base cloth pieces 4a together by a well-known method such as adhesion or stitching. The edge portions at which the base cloth pieces 4a are joined together correspond to the junction line F3. The base cloth pieces 4a jointed together at the junction line F3 may include another base cloth piece incorporated into the bag main body 1; the number of the base cloth pieces 4a may thus be three or more.

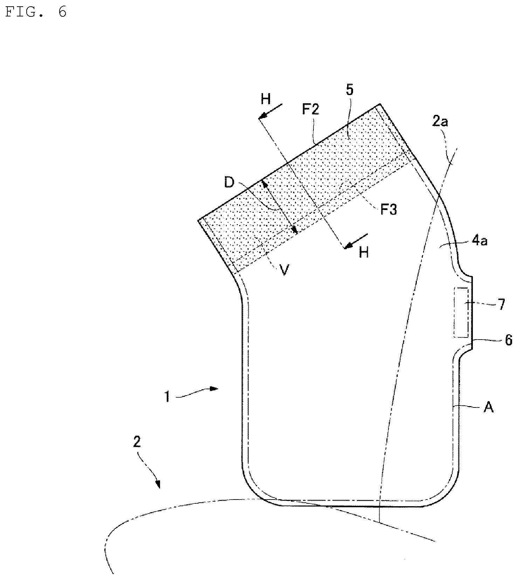

The junction line F3 corresponds to the fold-back line F1 according to the first embodiment, and two pieces of the base cloth 4 are laid on top of each other using the junction line F3 as a reference as shown in FIG. 4. Then, as shown in FIG. 6, the base cloth pieces are joined together at outer peripheral edges thereof (shown by an alternate long and short dash line A in FIG. 6) and thus formed into a bag shape. According to the second embodiment, the base cloth 4 is also formed by an outer contour that is line-symmetric with respect to the junction line F3, at which the two base cloth pieces are laid on top of each other.

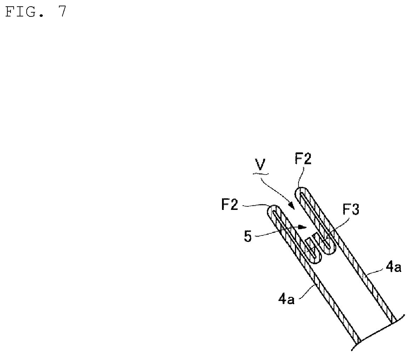

On the base cloth 4, a pair of mountain fold lines F2 is set on the opposite sides of the junction line F3 as shown in FIG. 4. An approximately equal separation distance D is set between the junction line F3 and each of the mountain fold lines F2. When the base cloth 4 is folded at the pair of mountain fold lines F2 in a mountain folding manner, the base cloth 4 is folded at the junction line F3, sandwiched between the mountain fold lines F2, in a valley folding manner as shown in FIG. 6 and FIG. 7. The mountain fold lines F2 and the valley fold at the junction line F3 provide the base cloth 4 with a V-shaped bent portion 5 that is recessed from the mountain fold lines F2 toward the junction line F3 as a result of the partial folding between the mountain fold line F2 and the junction line F3.

Of course, the second embodiment as described above exerts effects similar to the effects of the first embodiment. In particular, the second embodiment can preferably be adopted when the base cloth 4 includes a plurality of base cloth pieces 4a.

In either of the above-described embodiments, the bag main body 1 of the side airbag includes a first panel part positioned to face the occupant P and a second panel part positioned to face the interior surface 3 of the vehicle (see FIG. 1). The panel portions are provided in the bag main body 1 by folding the single base cloth 4 back or joining the different base cloth pieces 4a together by stitching. The first panel part, which faces the occupant P, forms a main occupant protecting surface directly coming into contact with and protecting the occupant P. The second panel part comes into contact with the interior surface 3 opposite the first panel part to form a main occupant protecting surface that indirectly protects the occupant P. Regardless of whether the base cloth 4 is a single base cloth or includes different base cloth pieces, the first panel part and the second panel part are eventually integrated together as described above. For the single base cloth 4, the panel portions are originally integrated together, and the base cloth 4 includes the integration part that integrates the panel portions together. When the base cloth 4 includes the different base cloth pieces 4a, the stitched portion thereof corresponds to an integrated part, resulting in an integrated panel portion.

The panel portions are arranged such that the main occupant protecting surfaces thereof overlap each other. According to the first embodiment, the single base cloth 4 is formed by an outer contour that is line-symmetric with respect to the fold-back line (valley fold portion) F1. According to the second embodiment, the different base cloth pieces 4a are formed into the same external configuration as that of the airbag according to the first embodiment. According to another embodiment, the single base cloth 4 need not have an outer contour that is line-symmetric with respect to the valley fold portion (fold-back line) F1. The different base cloth pieces 4a may be formed into different external configurations . In short, the external configurations of the first panel part and the second panel part may vary in size or shape as long as the first panel part and the second panel part are arranged such that the main occupant protecting surfaces overlap each other. Thus, the valley fold portion F1 and the junction line (stitched portion) F3 (the above-described bag shaping reference line) need not necessarily be placed at the boundary position between the first panel part and the second panel part but may be disposed on one of the panel portions.

The mountain fold portions (mountain fold lines) F2 are formed on each of the first panel part and the second panel part by folding the base cloth in a mountain folding manner. Moreover, the valley fold portion F1 is formed between the mountain fold portions F2 at the predetermined distance D from each of the mountain fold portions F2. The valley fold portion F1 may be placed at the boundary position between the first panel part and the second panel part, that is, at the integration part, or at another portion. Desirably, the mountain fold portions F2 are substantially (approximately) parallel to the valley fold portion F1. Preferably, the predetermined distance D from the valley fold portion F1 to the mountain fold portion F2 on the first panel part is substantially (approximately) equal to the predetermined distance D from the valley fold portion F1 to the mountain fold portion F2 on the second panel part.

The above-described junction portion A at the outer peripheral edge is a peripheral stitched portion at which peripheral portions of the first panel part and the second panel part are stitched together such that the valley fold portion F1 is at least partly exposed to the outside of the bag main body 1 when the airbag is deployed and inflated. The peripheral stitched portion includes parts in which the mountain fold portions F2 of the first panel part and the second panel part are coupled together at opposite end portions of the mountain fold portions F2, and also includes parts in which the valley fold portion F1 is coupled to the first panel part and the second panel part at opposite end portions of the valley fold portion F1.

## Claims

1. A vehicle side airbag to be deployed and inflated at a position lateral to an occupant (P), wherein
a base cloth (4) folded in a mountain folding manner at a pair of mountain fold line portions (F2) set on both sides of a bag shaping reference line and folded in a valley fold at the bag shaping reference line,
an outer peripheral edge of the base cloth (4) being joined to another outer peripheral edge of the base cloth (4) excepting the pair of mountain fold line portions (F2) and an inflator installation portion (6) to form the base cloth (4) into a bag shape, **characterized in that** the bag shaping reference line (F3) is a junction line at which a plurality of base cloth pieces (4a) forming the base close (4) are joined together.

2. A vehicle side airbag according to claim 1, comprising:
a first panel part positioned to face the occupant (P) and forming a main occupant protecting surface;
a second panel part positioned to face the vehicle and contacting the vehicle to form a main occupant protecting surface; and
an integration part that integrates the first panel part and the second panel part together,
the first panel part and the second panel part being arranged in such a manner that the main occupant protecting surfaces overlap each other,
the pair of mountain fold line portions (F2) being formed on the first panel part and the second panel part in such a manner that each of the panel portions is folded at the mountain fold line portion (F2) in a mountain folding manner,
a valley fold portion (F1) being formed between the pair of mountain fold line portions (F2) on the first panel part and the second panel part at a predetermined distance (D) from each of the mountain fold line portions (F2), and
each of the first panel part and the second panel part having a bag shaping reference line (F3) at which peripheral portions of the first panel part and the second panel part are stitched together in such a manner that the valley fold portion (F1) is at least partly exposed to an outside when the airbag is deployed and inflated, the configuration of which forms the first panel part and the second panel part into a bag shape.

3. The vehicle side airbag according to claim 2, wherein the bag shaping reference line (F3) includes parts in which the mountain fold line portions (F2) of the first panel part and the second panel part are coupled together and parts in which the valley fold portion (F1) is coupled to the first panel part and the second panel part.

4. The vehicle side airbag according to claim 2 or claim 3, wherein each of first panel part and the second panel part is formed of a single base cloth (4), and the valley fold portion (F1) is positioned at the integration part.

5. The vehicle side airbag according to claim 2 or claim 3, wherein the first panel part and the second panel part are formed of different base cloth pieces (4a), and the integration part is formed by stitching.

6. The vehicle side airbag according to any one of claims 2 to 5, wherein the mountain fold line portions (F2) and the valley fold portion (F1) are substantially parallel to each other.

7. The vehicle side airbag according to any one of claims 2 to 6, wherein the predetermined distance (D) from the valley fold portion (F1) to the mountain fold line portion (F2) of the first panel part is substantially equal to the predetermined distance (D) from the valley fold portion (F1) to the mountain fold line portion (F2) of the second panel part.

## Patentansprüche

1. Seitenairbag für Fahrzeuge, der an einer Position seitlich von einem Insassen (P) entfaltet und aufgeblasen werden soll, wobei
ein Basisgewebe (4), das bergartig an einem Paar von Bergfaltlinienabschnitten (F2), die auf beiden Seiten einer Sackformungsbezugslinie liegen, zusammengelegt ist und in einer Talfalte an der Sackformungsbezugslinie zusammengelegt ist,
wobei ein Außenumfangsrand des Basisgewebes (4) mit einem weiteren Außenumfangsrand des Basisgewebes (4) mit Ausnahme des Paars von Bergfaltlinienabschnitten (F2) und eines Gasgeneratormontageabschnitts (6) verbunden ist und so das Basisgewebe (4) in eine Sackform bringt, **dadurch gekennzeichnet, dass** die Sackformungsbezugslinie (F3) eine Verbindungslinie ist, an der eine Vielzahl von Basisgewebestücken (4a), die das Basisgewebe (4) bilden, miteinander verbunden sind.

2. Seitenairbag für Fahrzeuge nach Anspruch 1, umfassend:
einen ersten Bahnteil, der so platziert ist, dass er dem Insassen (P) zugewandt ist und eine Hauptinsassenschutzfläche bildet;
einen zweiten Bahnteil, der so platziert ist, dass er dem Fahrzeug zugewandt ist und das Fahrzeug berührt und so eine Hauptinsassenschutzfläche bildet; und
einen Vereinigungsteil, der den ersten Bahnteil und den zweiten Bahnteil miteinander vereint,
wobei der erste Bahnteil und der zweite Bahnteil derart angeordnet sind, dass sich die Hauptinsassenschutzflächen überlappen,
wobei das Paar von Bergfaltlinienabschnitten (F2) an dem ersten Bahnteil und dem zweiten Bahnteil derart ausgebildet ist, dass jeder der Bahnabschnitte an dem Bergfaltlinienabschnitt (F2) bergartig zusammengelegt ist,
wobei ein Talfaltabschnitt (F1) zwischen dem Paar von Bergfaltlinienabschnitten (F2) am ersten Bahnteil und am zweiten Bahnteil in einem vorgegebenen Abstand (D) zu jedem der Bergfaltlinienabschnitte (F2) ausgebildet ist, und
wobei sowohl der erste Bahnteil als auch der zweite Bahnteil eine Sackformungsbezugslinie (F3) aufweisen, an der Umfangsabschnitte des ersten Bahnteils und des zweiten Bahnteils derart zusammengenäht sind, dass der Talfaltabschnitt (F1) zumindest teilweise gegenüber einer Außenseite freiliegt, wenn der Airbag entfaltet und aufgeblasen wird, wobei die Gestaltung davon den ersten Bahnteil und den zweiten Bahnteil in eine Sackform bringt.

3. Seitenairbag für Fahrzeuge nach Anspruch 2, wobei die Sackformungsbezugslinie (F3) Teile aufweist, in denen die Bergfaltlinienabschnitte (F2) des ersten Bahnteils und des zweiten Bahnteils miteinander verbunden sind, und Teile, in denen der Talfaltabschnitt (F1) mit dem ersten Bahnteil und dem zweiten Bahnteil verbunden ist.

4. Seitenairbag für Fahrzeuge nach Anspruch 2 oder Anspruch 3, wobei sowohl der erste Bahnteil als auch der zweite Bahnteil aus einem einzigen Basisgewebe (4) gebildet sind und der Talfaltabschnitt (F1) am Vereinigungsteil platziert ist.

5. Seitenairbag für Fahrzeuge nach Anspruch 2 oder Anspruch 3, wobei der erste Bahnteil und der zweite Bahnteil aus unterschiedlichen Basisgewebestücken (4a) gebildet sind und der Vereinigungsteil durch Vernähen ausgebildet ist.

6. Seitenairbag für Fahrzeuge nach einem der Ansprüche 2 bis 5, wobei die Bergfaltlinienabschnitte (F2) und der Talfaltabschnitt (F1) im Wesentlichen parallel zueinander verlaufen.

7. Seitenairbag für Fahrzeuge nach einem der Ansprüche 2 bis 6, wobei der vorgegebene Abstand (D) vom Talfaltabschnitt (F1) zum Bergfaltlinienabschnitt (F2) des ersten Bahnteils im Wesentlichen dem vorgegebenen Abstand (D) vom Talfaltabschnitt (F1) zum Bergfaltlinienabschnitt (F2) des zweiten Bahnteils entspricht.

## Revendications

1. Airbag latéral de véhicule destiné à être déployé et gonflé dans une position latérale par rapport à un occupant (P), dans lequel
une étoffe de base (4) pliée selon un pli montagne sur une paire de portions de ligne de pli montagne (F2) placées des deux côtés d'une ligne de référence de formation de sac et pliée selon un pli vallée sur la ligne de référence de formation de sac,
un bord périphérique extérieur de l'étoffe de base (4) étant assemblé à un autre bord périphérique extérieur de l'étoffe de base (4) à l'exception de la paire de portions de ligne de pli montagne (F2) et d'une portion d'installation de gonfleur (6) pour conférer à l'étoffe de base (4) une forme de sac, **caractérisé en ce que** la ligne de référence de formation de sac (F3) est une ligne de jonction sur laquelle une pluralité de morceaux d'étoffe de base (4a) formant l'étoffe de base (4) sont assemblés les uns aux autres.

2. Airbag latéral de véhicule selon la revendication 1, comprenant :
une première partie de panneau positionnée pour faire face à l'occupant (P) et formant une surface principale de protection d'occupant ;
une seconde partie de panneau positionnée pour faire face au véhicule et en contact avec le véhicule pour former une surface principale de protection d'occupant ; et
une partie d'intégration qui réunit la première partie de panneau et la seconde partie de panneau,
la première partie de panneau et la seconde partie de panneau étant agencées de telle manière que les surfaces principales de protection d'occupant se chevauchent mutuellement,
la paire de portions de ligne de pli montagne (F2) étant formée sur la première partie de panneau et la seconde partie de panneau de telle manière que chacune des portions de panneau est pliée selon un pli montagne sur la portion de ligne de pli montagne (F2),
une portion de pli vallée (F1) étant formée entre la paire de portions de ligne de pli montagne (F2) sur la première partie de panneau et la seconde partie de panneau à une distance prédéfinie (D) de chacune des portions de ligne de pli montagne (F2), et
chacune de la première partie de panneau et de la seconde partie de panneau comportant une ligne de référence de formation de sac (F3), sur laquelle des portions périphériques de la première partie de panneau et de la seconde partie de panneau sont piquées ensemble de telle manière que la portion de pli vallée (F1) est au moins en partie exposée à l'extérieur quand l'airbag est déployé et gonflé, dont la configuration confère à la première partie de panneau et la seconde partie de panneau une forme de sac.

3. Airbag latéral de véhicule selon la revendication 2, dans lequel la ligne de référence de formation de sac (F3) comporte des parties dans lesquelles les portions de ligne de pli montagne (F2) de la première partie de panneau et de la seconde partie de panneau sont couplées l'une à l'autre et des parties dans lesquelles la portion de pli vallée (F1) est couplée à la première partie de panneau et la seconde partie de panneau.

4. Airbag latéral de véhicule selon la revendication 2 ou la revendication 3, dans lequel chacune de la première partie de panneau et de la seconde partie de panneau est formée à partir d'une unique étoffe de base (4), et la portion de pli vallée (F1) est positionnée sur la partie d'intégration.

5. Airbag latéral de véhicule selon la revendication 2 ou la revendication 3, dans lequel la première partie de panneau et la seconde partie de panneau sont formées à partir de différents morceaux d'étoffe de base (4a), et la partie d'intégration est formée par une piqûre.

6. Airbag latéral de véhicule selon l'une quelconque des revendications 2 à 5, dans lequel les portions de ligne de pli montagne (F2) et la portion de pli vallée (F1) sont sensiblement parallèles les unes aux autres.

7. Airbag latéral de véhicule selon l'une quelconque des revendications 2 à 6, dans lequel la distance prédéfinie (D) de la portion de pli vallée (F1) à la portion de ligne de pli montagne (F2) de la première partie de panneau est sensiblement égale à la distance prédéfinie (D) de la portion de pli vallée (F1) à la portion de ligne de pli montagne (F2) de la seconde partie de panneau.
